# EUROPÄISCHE PATENTSCHRIFT

(11) **EP 0 485 696 B1**
(45) Veröffentlichungstag und Bekanntmachung des Hinweises auf die Patenterteilung: **20.12.1995**
(21) Anmeldenummer: 91114066.3
(22) Anmeldetag: 22.08.1991
(51) Int. Cl.: F16C 27/06, B60G 7/02

(54) **Elastisches Gleitlager**
Elastic bearing
Palier élastique

(30) Priorität: 13.11.1990 DE 4036050
(43) Veröffentlichungstag der Anmeldung: 20.05.1992
(73) Patentinhaber: LEMFOERDER METALLWAREN AG., D-49441 Lemförde (DE)
(72) Erfinder: Jördens, Ernst Günter, Dipl.-Ing., W-2845 Damme (DE); Kammel, Helmut, Dipl.-Ing., W-2845 Damme (DE)
(74) Vertreter: Bruse, Willy Hans Heinrich

(56) Entgegenhaltungen:
- DE-A- 2 356 586
- DE-A- 2 365 798
- DE-C- 3 804 886
- DE-U- 1 903 303
- FR-A- 2 173 397
- GB-A- 1 223 471
- US-A- 3 424 503

## Beschreibung

Die Erfindung betrifft ein elastisches Gleitlager für Fahrwerksteile in Kraftfahrzeugen nach dem Oberbegriff des Patentanspruches 1.

Bekannt ist ein solches Lager aus der DE-C-38 04 886. Es dient vor allem zur Lagerung der Radlenker und weist eine Außenbuchse auf, deren innere Hülse im unmittelbaren Kontakt mit der Gleitfläche der Innenbuchse steht, und deren außenliegender Gummikörper (Elastomer) in ein Lagerauge eines Fahrzeugteiles einsetzbar ist. Der sich einseitig am axialen Ende der Innenbuchse erstreckende Flanschvorsprung ist mit der Innenbuchse einstückig geformt. Der radiale Flanschvorsprung an dem axialen Ende des Gummikörpers wird durch einen mit dem Gummikörper fest verbundenen Ring gebildet. Solche Lager sind an sich einseitig ausgebildet und werden paarweise in einer zueinander spiegelbildlichen Anordnung eingebaut und mit einem Axialspiel, welches eigentlich unerwünscht ist, gegeneinander verspannt, um das Drehmoment niedrig zu halten. Zur Verminderung des an sich hohen Verschleißes solcher Gleitlager umgreift bei der bekannten Ausführung die einstückig mit dem Gummikörper ausgebildete Dichtlippe das Profil der beiden aneinanderliegenden Flanschvorsprünge der Innenbuchse und der Außenbuchse außenseitig und berührt auf der axial äußeren Seite den Flanschvorsprung an der Innenbuchse unter Vorspannung.

Aus der DE-C-36 13 123 ist ein Gleitlager bekannt, bei dem sich zwischen einer Innenbuchse und einer Außenbuchse, die von einem mit ihr verbundenen Elastomerkörper (Gummikörper) und dieser von einer starren Aufnahmebuchse umgeben ist, eine auf der Innenbuchse fest angeordnete Kunststoffschicht (PTFE-Schicht) befindet, die gute Gleiteigenschaften aufweist und bei der auf der Kontaktfläche mit der Gleitfläche der Außenbuchse Schmiermitteltaschen vorgesehen sind, die zur Dauerschmierung mit Fett gefüllt werden. Solche Gleitlager sind empfindlich gegen mechanische Einwirkungen auf die Kunststoffbeschichtung und in der bekannten Ausführung zur Aufnahme axialer Belastungen nicht verwendbar.

Die DE-A-23 56 586 zeigt ein gattungsähnliches elastisches Gleitlager mit einer mit Kunststoff beschichteten Scheibe zwischen einem zusammen mit einem Gegenflansch eine Axiallagerung bildenden Flansch aus Elastomer und dem Gegenflansch. Es fehlen aber Aussparungen in der Anlagefläche des Elastomerkörpers. Ringförmige Ausnehmungen an sich radial erstreckenden Stützflächen eines Elastomerkörpers in einer Lagerung sind aus der US-A-32 98 762 bekannt.

Aufgabe der Erfindung ist es, ein axial belastbares Gleitlager der eingangs genannten Bauart in den Laufeigenschaften zu verbessern und ein Axialspiel ohne spürbare Drehmomenterhöhung auszugleichen.

Erfindungsgemäß wird diese Aufgabe durch eine Ausbildung nach dem Patentanspruch 1 gelöst.

Bei dieser Ausbildung werden eventuelle Axialkräfte durch eine Scheibe von der Innenbuchse auf die Außenbuchse oder umgekehrt übertragen. Diese Scheibe besteht vorteilhaft aus Kunststoff mit guten Gleiteigenschaften, gegebenenfalls aus PTFE (Polytetrafluoräthylen) oder einer aus diesem Werkstoff bestehenden Beschichtung auf der Gleitfläche.

Durch den Einsatz der losen Scheibe ist es möglich, den Elastomerkörper an der an diese Kunststoffscheibe anliegenden, die Axiallagerfläche bildenden Radialfläche Ausnehmungen vorzusehen, um dadurch die axiale Steifigkeit des Elastomerkörpers in dem an der Kunststoffscheibe anliegenden Randbereich zu reduzieren. Die paarweise angeordneten Gleitlager der erfindungsgemäßen Ausbildung können ohne spürbare Drehmomenterhöhung unter Ausgleich des Axialspiels miteinander verspannt werden. Eine Verteuerung der Herstellung solcher Gleitlager in der erfindungsgemäßen Ausbildung entsteht gegenüber dem Stande der Technik nicht.

Die Unteransprüche 3 und 4 enthalten vorteilhafte Ausgestaltungen der Ausbildung nach dem Hauptanspruch.

Auf der Zeichnung ist ein Ausführungsbeispiel der Erfindung an einem paarweise zum Einbau gelangenden Lager dargestellt. Es zeigen:
Figur 1 eine Ausbildung des neuen Gleitlagers im Schnitt in einer Achsebene und
Figur 2 eine maßstäbliche Vergrößerung des Ausschnittes "A" in Figur 1.

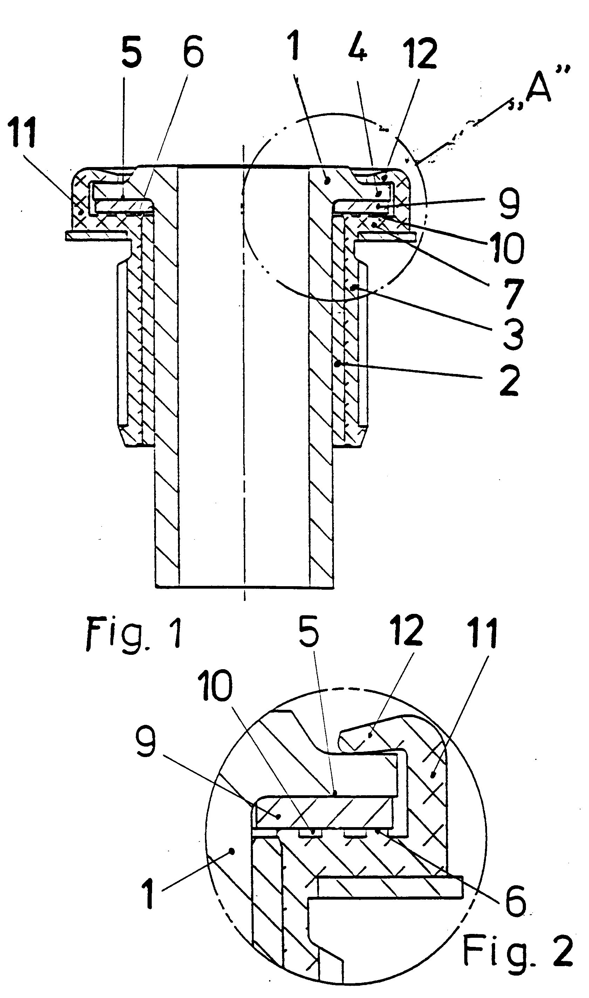

Das elastische Gleitlager besteht aus einer starren Innenbuchse 1, einer im wesentlichen ebenfalls starren Außenbuchse 2 und einem diese umgebenden Elastomerkörper 3. Ein solches Lager wird paarweise in zueinander spiegelbildlicher Anordnung in ein Lagerauge eines auf der Zeichnung nicht dargestellten Radlenkers oder dergleichen eingesetzt, um diesen mittels eines die Innenbuchse 1 durchgreifenden Bolzens an den ebenfalls nicht dargestellten Längsholmen eines Kraftfahrzeuges zu befestigen. In der Figur 1 ist die Ausbildung eines der beiden zusammengehörigen Lagers dargestellt.

An einem axialen Ende der Innenbuchse 1 ist ein sich radial erstreckender Flanschvorsprung 4 ausgebildet, dessen Axiallagerfläche 5 zur Übertragung axialer Kräfte mit einer Axiallagerfläche 6 an einem Flanschvorsprung 7 zusammenwirkt, der mit dem Elastomerkörper einstückig geformt ist. Eine lose eingelegte Scheibe 9 ist zwischen der Axiallagerfläche 5 am Flanschvorsprung 4 und der Axiallagerfläche 6 am Flanschvorsprung 7 angeordnet. Diese lose eingelegte Scheibe 9 besteht vorteilhaft aus Kunststoff mit guten Gleiteigenschaften. Gleitende Bewegung findet zwischen der Kontaktfläche der Scheibe 9 und der Axiallagerfläche 5 am Flanschvorsprung 4 statt. Auf der dieser Gleitfläche gegenüberliegenden Seite der Scheibe 9 ist die Axiallagerfläche 6 des Flanschvorsprunges 7 mit Ausnehmungen 10 versehen, durch die die axiale Steifigkeit des elastomeren Werkstoffes des Flanschvorsprunges 7 in dem an der Scheibe 10 anliegenden Randbereich weiter verringert wird. Dieser nach dem Einbau des Lagers beidseitig in der Lagerstelle vorhandene elastische Randbereich sorgt für den angestrebten Axialspielausgleich bei der Verspannung der beiden paarweise eingebauten Lager in Richtung der Längsachse des die Innenbuchse 1 durchgreifenden, auf der Zeichnung jedoch nicht dargestellten Bolzens. Die den Flanschvorsprung 7 berührende Kontaktfläche der Scheibe 9, die sich somit gegen die Axiallagerflache des Elastomerkörpers abstützt, weist vorteilhaft eine die Reibung erhöhende Profilierung auf, so daß Gleitbewegungen ausschließlich an der Fläche des Kontaktes zwischen der Axiallagerfläche 5 und der zugewendeten Oberfläche der Scheibe 9 stattfinden. Eine solche Profilierung kann beispielsweise auch durch eine rauhe Oberfläche erreicht werden. Zum Zwecke der Erreichung des gleichen Zieles sind in axialer Richtung durchgehende Bohrungen der Scheibe 9 ebenfalls geeignet, so daß sich die Profile an der Axiallagerfläche 6 des Flanschvorsprunges 7 in diese Bohrungen unter elastischer Verformung eindrücken und dadurch die Oberflächenreibung zwischen beiden Teilen verstärken. In an sich bekannter Weise werden die aufeinander gleitenden Axiallagerflächen 5 und 6 durch einen sich an den Flanschvorsprung 7 anschließenden Kragenrand 11 abgedichtet, der die Scheibe 9 und den Flanschvorsprung 4 außenseitig übergreift und sich mit einer Dichtungslippe 12 gegen die axiale Endfläche des Flanschvorsprunges 4 legt und andererseits gegen den nicht dargestellten Längsholm oder eines anderen Bauteiles eines Kraftfahrzeuges abstützt. Zur Erzielung verbesserter Laufeigenschaften des Gleitlagers und zur Verlängerung seiner Lebensdauer kann die lose eingelegte Scheibe 9 aus PTFE (Polytetrafluoräthylen) bestehen oder auf der Kontaktfläche mit der Axiallagerfläche 5 mit einem solchen Werkstoff beschichtet sein.

### BEZUGSZEICHENLISTE:

- 1: Innenbuchse
- 2: Außenbuchse
- 3: Elastomerkörper
- 4: Flanschvorsprung
- 5: Axiallagerfläche
- 6: Axiallagerfläche
- 7: Flanschvorsprung
- 9: Scheibe
- 10: Ausnehmung
- 11: Kragenrand
- 12: Dichtlippe

## Patentansprüche

1. Elastisches Gleitlager für Fahrwerksteile in Kraftfahrzeugen, bestehend aus einer starren Innenbuchse (1) und einer auf dieser gelagerten, außen von einem Elastomerkörper (3) umgebenen Außenbuchse (2), wobei die Innenbuchse (1) und der Elastomerkörper (3) an einem axial äußeren Lagerende zur Bildung einer zwischen der Innenbuchse (1) und der Außenbuchse (2) wirkenden Axiallagerung mit jeweils einem radial nach außen gerichteten Flanschvorsprung (4,7) ausgebildet sind und wobei eine die Axiallagerflächen umgreifende Dichtung vorgesehen ist, die mit wenigstens einer Dichtlippe gegen die axial äußere Flanschfläche wirksam ist, dadurch gekennzeichnet, daß zwischen den beiden Flanschvorsprüngen (4,7) eine Kunststoffscheibe (9) lose eingelegt ist, die an der Kunststoffscheibe (9) anliegende Oberfläche des Flanschvorsprungs (7) des Elastomerkörpers (3) dessen axiale Steifigkeit im Anlagebereich reduzierende Ausnehmungen (10) aufweist, und daß bei einer Verdrehung der Außenbuchse (2) gegenüber der Innenbuchse (1) die gleitende Bewegung in der Axiallagerung zwischen der Kunststoffscheibe (9) und dem Flanschvorsprung (4) der Innenbuchse (1) stattfindet.

2. Gleitlager nach Anspruch 1, dadurch gekennzeichnet, daß die lose eingelegte Kunststoffscheibe (9) in deren Achsrichtung durchgehende Ausnehmungen aufweist.

3. Gleitlager nach Anspruch 1, dadurch gekennzeichnet, daß die dem Flanschvorsprung (7) des Elastomerkörpers (3) zugewandte Oberfläche der Kunststoffscheibe (9) eine die Reibung erhöhende Profilierung aufweist.

## Claims

1. Elastic sliding bearing for chassis parts in motor vehicles, comprising a rigid inner bush (1), on which is supported an outer bush (2) externally surrounded by an elastomer body (3), the inner bush (1) and the elastomer body (3) at an axially outer bearing end each being constructed with a radially outward-directed flange projection (4, 7) to form a thrust bearing acting between the inner bush (1) and the outer bush (2) and a seal being provided which engages around the thrust bearing surfaces and acts with at least one sealing lip against the axially outer flange surface, characterized in that loosely inserted between the two flange projections (4, 7) is a plastic disk (9), the surface of the flange projection (7) of the elastomer body (3) lying adjacent to the plastic disk (9) has recesses (10) which reduce the axial rigidity of the elastomer body in the contact region, and that upon twisting of the outer bush (2) relative to the inner bush (1) the sliding movement occurs in the thrust bearing between the plastic disk (9) and the flange projection (4) of the inner bush (1).

2. Sliding bearing according to claim 1, characterized in that the loosely inserted plastic disk (9) has continuous recesses which extend in an axial direction of the disk.

3. Sliding bearing according to claim 1, characterized in that the surface of the plastic disk (9) facing the flange projection (7) of the elastomer body (3) has a friction-increasing profile.

## Revendications

1. Palier élastique pour des pièces de châssis dans des véhicules, se composant d'une douille intérieure rigide (1) et d'une douille extérieure (2) logée sur celle-ci et entourée extérieurement d'un corps en élastomère (3), la douille intérieure (1) et le corps en élastomère (3) ayant chacun à une extrémité axialement extérieure du palier une saillie formant collerette (4,7) s'étendant radialement vers l'extérieur afin de former un palier de butée agissant entre la douille intérieure (1) et la douille extérieure (2), et un joint entourant les surfaces de butée axiale, ledit joint agissant avec au moins une lèvre d'étanchéité contre la surface axialement extérieure de la collerette, caractérisé en ce qu'un disque en matière synthétique (9), non fixé, est posé entre les deux saillies formant collerettes (4,7), en ce que la surface de la saillie (7) du corps en élastomère (3) appliquée contre le disque en matière synthétique (9) est munie d'évidements (10) réduisant sa rigidité axiale dans la région d'appui, et en ce que le mouvement glissant se produit dans la butée axiale entre le disque en matière synthétique (9) et la saillie (4) de la douille intérieure (1) lorsque la douille extérieure (2) tourne par rapport à la douille intérieure (1).

2. Palier selon la revendication 1, caractérisé en ce que le disque en matière synthétique (9) non fixé est muni d'évidements traversants orientés selon l'axe du disque.

3. Palier selon la revendication 1, caractérisé en ce que la surface du disque en matière synthétique (9) tournée vers la saillie (7) du corps en élastomère (3) est munie d'un profilage accroissant le frottement.
